# EUROPEAN PATENT APPLICATION

(11) **EP 3 878 279 A1**
(43) Date of publication of application: **15.09.2021**
(21) Application number: 20162264.4
(22) Date of filing: 10.03.2020
(51) Int. Cl.: A01N 25/04, A01N 43/40, A01N 53/00

(54) **USE OF OIL BASED SUSPO-EMULSION CONCENTRATES FOR REDUCING DRIFT DURING SPRAY APPLICATION**

(71) Applicant: Bayer Aktiengesellschaft, 51373 Leverkusen (DE)
(72) Inventor: The designation of the inventor has not yet been filed
(74) Representative: BIP Patents

(57) **Abstract**

The present invention relates to the use of oil based suspo-emulsion concentrates which reduce drift during spray application. The oil based suspo-emulsion concentrates are usually diluted with water and optionally further supplemented with additional additives. The spray liquid so obtained is then sprayed and is especially applicable for spraying using conventional hydraulic nozzles.

## Description

The present invention relates to the use of oil based suspo-emulsion concentrates which reduce drift during spray application. The oil based suspo-emulsion concentrates are usually diluted with water and optionally further supplemented with additional additives. The spray liquid so obtained is then sprayed and is especially applicable for spraying using conventional hydraulic nozzles.

Pesticidal active compounds (a.s.), e.g., herbicides, fungicides, insecticides, bactericides, miticides, plant growth regulators, etc., and their formulated products are often sprayed, normally after dilution in an aqueous spray liquid, onto plants and / or their habitat. When applying such spray formulations, a more or less pronounced drifting of the spray solution containing the active substance(s) may be observed, depending on the wind conditions, nozzle type, and other application parameters such as, for example, nozzle pressure, boom height, and tractor speed.

Pesticide spray drift is a major source of concern in relation to the environmental impact of agriculture on natural ecosystems and urban areas. Furthermore, this drift is undesirable because it causes a certain part of the applied agrochemical to be lost as far as the intended application rate of the treated area is concerned. More importantly, the drifting material might cause damage to neighboring crops and especially, have effects on the local environment (e.g., surface water, non-target flora and fauna) as well as bystanders and occupants in residential areas.

Various methods are used to prevent the drifting of the spray outside the field borders. The use of natural or artificial windbreaks is well known. However, it has been described that even when such screens are used, drift can cause deposition of the active substances behind such borders (e.g., "Deposition of spray drift behind border structures", M. De Schampheleire et al. Crop Protection 28 (2009) 1061-1075). Another frequently used drift mitigation measure is buffer zones, either off-crop or in-crop. A disadvantage of off-crop buffer zones is that part of the field cannot be sown with a crop, an economic cost to the farmer. A disadvantage of in-crop buffer zones is that part of the crop is not protected adequately, resulting in a lower yield and perhaps resistance development. Clearly, this is something farmers want to prevent.

Next to physically limiting spray drift, it is also possible to alter the structure of the spray cloud so that less drops are prone to drift - i.e., typically those drops prone to drift have a diameter under 100 µm. This can be done by choosing different types of nozzles, changing the pressure at which the spray cloud is produced, or by changing the properties of the spray liquid itself. Especially changing nozzles and / or nozzle pressure is something farmers do not prefer to do because it is time consuming and makes the production of their crop more expensive. Also, the equipment necessary on sprayer to deal with variable application rates is not common. For these reasons, a more acceptable way to optimise a spray cloud, so that it leads to less or more limited drift, is by adjusting the properties of the spray liquid.

Although other factors such as meteorological conditions and spray boom height contribute to the potential for drift, spray droplet size distribution has been found to be a predominant factor. Teske et. al. (Teske M. E., Hewitt A. J., Valcore, D. L. 2004. The Role of Small Droplets in Classifying Drop Size Distributions ILASS Americas 17th Annual Conference: Arlington VA) have reported a value of < 156 microns (µm) as the fraction of the spray droplet distribution that contributes to drift. Other researchers consider droplets with diameter < 150 µm to be most drift-prone (J. H. Combellack, N. M. Westen and R. G. Richardson, Crop Prot., 1996, 15, 147-152, O. Permin, L. N. Jørgensen and K. Persson, Crop Prot., 1992, 11, 541 - 546). Another group H. Zhu, R. W. Dexter, R. D. Fox, D. L. Reichard, R. D. Brazee and H. E. Ozkan, J. Agric. Engineering Res., 1997, 67, 35-45.) cites a value of < 200 µm as the driftable fraction. Based on theoretical studies and computer simulations, spray droplets with diameter < 100 µm have been identified as the most drift-prone (H. Holterman, Kinetics and evaporation of water drops in air, 2003, IMAG Report 2003-12; P. A. Hobson, P. C. H. Miller, P. J. Walklate, C. R. Tuck and N. M. Western, J. Agr. Eng. Res., 1993, 54, 293-305; P. C. H. Miller, The measurement of spray drift, Pesticide Outlook, 2003, 14, 205-209). A good estimation of droplet size likely to contribute to drift, therefore, is the fraction below about 100 µm. The smaller the droplets the longer is the residence time in the air and the higher is the tendency to evaporate and / or to drift rather than deposit within the field borders. A way to minimize the drift effect is by adding suitable drift control agents to pesticide formulations that increase the size of the droplets in the spray cloud - i.e., shift the droplet spectra towards larger droplets.

Numerous commercial products are available that can be added as a tank mix adjuvant with pesticide formulations during the preparation of the spray liquid. Examples are: Drop Zone™ DC, Pointblank®, Nalcotrol® and Sta-Put® from Helena, and AntiDrift from AmegA Science Inc. These products increase the average droplet size of the spray cloud, by increasing the viscosity of the spray solution. Furthermore, several patents have been published that teach the use of viscosity modifiers to reduce drift (e.g., US 005824797A, CA 1084689A, WO 0026160A, US 006103793A, or WO 0160877A). However, there is a tendency for viscosity modifiers to create extremely large droplets, next to deleting the fraction below 100 micrometer when atomising liquids through conventional agricultural hydraulic nozzles. This results in a significant lower number of droplets and leads to nonhomogenous distribution and nonhomogenoius uptake. There is clearly a balance between droplet spectra that are so coarse that drift is near nil but biological efficacy is greatly reduced, e.g. due to reduced contact area on the plant, and exceedingly fine sprays where biological efficacy might be very good but drift problems are prohibitive.

The reason why such additives are still added as tank-mix adjuvant relates to the amount of additive needed to obtain a reliable result. If such an amount is added to the spray solution as part of the initial formulation containing the active compound, the formulation on its own will have an extremely high viscosity, making it very difficult for the farmer to use. It has to be considered that dilution factors of a formulated product (formulation, suspo-emulsion) into the final spray liquid can range from factor 50 to several 1000.

Although tank-mix adjuvants are commercially available, there is a great demand for single-package solutions (i.e., all components in one container, sometimes known as "in-can") because of the many advantages these in-can products have. The main advantage relates to the security and accuracy in the dosing. For in-can products, the per ha dose is related to the dosing of the active compound, which is in general done accurately since this correlates with the efficacy of the spray. By using an in-can product and applying its label instructions, it is therefore guaranteed that neither the anti-drift adjuvant nor the active compound is applied under-dosed. Furthermore, by using in-can products, the safety of the operator can be improved, since less bottles / products have to be handled. There is also the advantage of less packaging material, reducing the degree of indirect pollution / waste disposal.

When searching for solutions to overcome the drift problem, it has to be taken into account that the biological performance of the resulting application is not reduced. The use of formulation (both in-can and tank-mix) that increase the spray droplet size may reduce the efficacy to some extent, mainly because of reduced cover (e.g., "Biological efficacy of herbicides and fungicides applied with low-drift and twin-fluid nozzles" P.K.Jensen et al. Crop Protection 20 (2001)57-64). Retention of larger droplets on leaf surfaces will be reduced as they run-off or bounce or shatter and redistribute. Fewer larger droplets adhering to the leaf surface will reduce overall biological efficacy. Furthermore, for crops where the spray cloud has to penetrate into the canopy of the crop, very large droplets can pass directly through canopies, or bounce off leaves, or shatter and redistribute to soil. All these effects of applying active compound in large droplets add to reduced efficacy.

Based on the described market demands - good efficacy but limited drift - the problem to be solved with the present invention was to deliver in-can formulations that reduce drift without affecting the biological performance. Ideally the biological efficacy shall be increased.

Suspo-emulsion with improved biological performance has been described before (e.g., WO2003000053, WO2005084441, WO2006111279, WO2008031512, WO2009106247). Formulations produced according to these patents show a synergistic efficacy as compared to closely related products as well as to straight products of the same active compound in combination with a tank- mix adjuvant. These products contain as well as the active compound: oil, high concentrations of surfactants, but no thickening agent.

It has been discussed in literature that oils and the presence of emulsion droplets could affect the sheet breakup mechanism and thus the droplet size distribution (Hermansky C.G. and Krause G.F., Proc, ISAA 4th international conference (1997) pp. 20-26; Hewitt A.J., Environmentalist 28 (2008) pp. 25-30). The mechanism explaining these interactions relates to the fact that these oil droplets are not wettable and therefore accumulate at the air water interface creating holes and consequently influence the breakup process. The addition of surfactant, however, reduces or even extinguishes this effect (E. Hilz, A. V. P. Vermeer, M. A. Cohen Stuart, F. A. M. Leermakers, Atomization and Sprays, 22 (12): 1053-1075 (2012)).

Surprisingly it has been found that an emulsified oil including high load of surfactant can efficiently reduce fine spray fraction, while it was expected that a high surfactant load leads to improved spray retention and spreading on target surface but also such spray liquids with high surfactant loads tend to form a high number of fine droplets in spray due to low surface tension.

Moreover, it has surprisingly been found that the suspo-emulsion according to the invention produced less fine droplets in spray applications although the formulations do not contain any additives that increase the viscosity of their spray liquids. At the same time the concentrates according to the invention use a water-based formulation concept that increases bioavailability of solid active ingredients compared to suspension concentrates.

Surprisingly, it was found that the use of suspo-emulsion concentrates containing
a) at least one agrochemical active compound which is solid at room temperature,
b) at least one vegetable, mineral or paraffinic oil, or chemical derivatives thereof, wherein optionally said oil has penetration enhancing properties for the agrochemical active compound a),
c) at least one emulsifier,
d) at least one non-ionic surfactant or dispersing agent and and/or at least one anionic surfactant or dispersing agent, and
e) optionally one or more other additives,
reduces the drift of the agrochemically active compound upon spraying.

The concentrates (suspo-emulsion) according to the instant invention significantly reduce the drift (of the sprayed liquid containing the suspo-emulsion) during spray application.

Further, the concentrates of the instant invention show a significant increase of the droplet size of the spray clouds produced during spray application.

The finding of this effect is surprising for the suspo-emulsion of the instant invention, since they do not contain additives that increase the viscosity of the spray liquid selected from the group consisting of polyacrylamides, guar gums and polyethylenoxid based drift retardants.

Therefore, the preferred embodiment of the invention is directed to the concentrates containing
a) at least one agrochemical active compound which is solid at room temperature,
b) at least one vegetable or mineral / paraffin oil, or chemical derivatives thereof, as defined above
c) at least one emulsifier,
d) at least one non-ionic surfactant or dispersing agent and / or at least one anionic surfactant or dispersing agent,
e) optionally one or more other additives,
wherein the concentrate is free of viscosity modifiers that increase the viscosity of the spray liquid selected from the group consisting of polyacrylamides, guar gums and polyethylenoxid based drift retardants,
as well as the use of the concentrate (suspo-emulsion) for the reduction of the drift of a spray liquid containing the suspo-emulsion during spray application.

In one embodiment the concentrate comprises Xanthan as stabilizer in an amount from 0.01 to 3 % by weight, preferably from 0.05 to 1 % by weight, and most preferred from 0.1 - 0.5 % by weight.

Xanthan according to the present invention is not considered as viscosity modifier according to the present invention.

Preferably, the spray liquid contains at least 0.000001 - 10 wt.-%, based on the weight of the spray liquid, of the suspo-emulsion. Preferably, the spray liquid contains 0.00005 - 2.5 wt.-%, based on the weight of the spray liquid, including water.

In a preferred embodiment the component b) has penetration enhancing properties.

In a further preferred embodiment component b) comprises a mixture of at least two, preferably two, oils as defined above. Further preferred at least one of the oils in the mixture has penetration enhancing properties.

Even further preferred the oil with the penetration enhancing properties is present in at least 40% based on component b).

Most preferred component b) is a mixture of rape seed oil methyl ester and 2-ethyl-hexyl-palmitate.

In the context of the present invention the terms vegetable, mineral or paraffinic oil shall include their chemical derivatives if not otherwise indicated.

Chemical derivative, if not defined otherwise, in the context of the present invention means esters, amides, anhydrids, acid chlorids, halogenated compounds and other compounds derived from the base structure by single chemical transformation.

Further, in a preferred embodiment, the concentrate is free of viscosity modifiers, more preferably of modifiers that increase the viscosity of the spray liquid, which are, most preferably, selected from the group consisting of polyacrylamides, guar gums and polyethylenoxid based drift retardants.

In a preferred embodiment of the invention the suspo-emulsions (concentrates) are containing
a) 5 - 40 wt.-%, preferably 8 - 35 wt.-%, more preferred 10 - 30 wt.-% and most preferred 12-25 wt.-% of at least one agrochemical active compound which is solid at room temperature, based on the weight of the suspension concentrate,
b) 5 - 50 wt.-%, preferably 8 - 40 wt.-%, more preferred 10 - 35 wt.-%, and most preferred 15 - 35 wt.-%, of at least one vegetable or mineral / paraffin oil, based on the weight of the suspension concentrate that optionally has penetration enhancing properties for the active ingredient a),
c) 0.2 - 5 wt.-%, preferably 0.4 - 4 wt.-%, more preferred 0.5 - 3.5 wt.-%, most preferred 0,5 - 3 wt.-% of at least one emulsifier
d) 0.5 - 25 wt.-%, preferably 0.5 - 15 wt.-%, more preferred 0.8 - 10 wt.-%, most preferred 1.5 - 7.5 wt.-%, of at least one non-ionic surfactant or dispersing agent and / or at least one anionic surfactant or dispersing agent, based on the weight of the suspension concentrate, and
e) optionally 0 - 25 wt.-%, preferably 0,1 - 20 wt.-%, most preferred 1 - 10 wt.-%, of one or more other additives,
g) water added to 100 wt-%,
wherein the concentrate is free of viscosity modifiers selected from the group of polyacryl amides, guar gum, polyethylene oxides.

Room temperature, if not defined otherwise in the present invention, corresponds to 20°C.

In one embodiment of the invention the suspo-emulsions (concentrates) are containing
a) 5 - 40 wt.-% of at least one agrochemical active compound which is solid at room temperature, based on the weight of the suspension concentrate,
b) 5 - 50 wt.-% of at least one vegetable or mineral / paraffin oil, based on the weight of the suspension concentrate that optionally has penetration enhancing properties for the active ingredient a),
c) 0.2 - 5 wt.-% of at least one emulsifier
d) 0.5 - 25 wt.-% of at least one non-ionic surfactant or dispersing agent and / or at least one anionic surfactant or dispersing agent, based on the weight of the suspension concentrate, and
e) optionally 0 - 25 wt.-% of one or more other additives,
g) water added to 100 wt-%,
wherein the concentrate is free of viscosity modifiers selected from the group of polyacryl amides, guar gum, polyethylene oxides.

In one embodiment of the invention the suspo-emulsions (concentrates) are containing
a) 8 - 35 wt.-% of at least one agrochemical active compound which is solid at room temperature, based on the weight of the suspension concentrate,
b) 8 - 40 wt.-% of at least one vegetable or mineral / paraffin oil, based on the weight of the suspension concentrate that optionally has penetration enhancing properties for the active ingredient a),
c) 0.4 - 4 wt.-% of at least one emulsifier
d) 0.5 - 15 wt.-% of at least one non-ionic surfactant or dispersing agent and / or at least one anionic surfactant or dispersing agent, based on the weight of the suspension concentrate, and
e) 0.1 - 20 wt.-% of one or more other additives,
g) water added to 100 wt-%,
wherein the concentrate is free of viscosity modifiers selected from the group of polyacryl amides, guar gum, polyethylene oxides.

In one embodiment of the invention the suspo-emulsions (concentrates) are containing
a) 10 - 30 wt.-% of at least one agrochemical active compound which is solid at room temperature, based on the weight of the suspension concentrate,
b) 10 - 35 wt.-% of at least one vegetable or mineral / paraffin oil, based on the weight of the suspension concentrate that optionally has penetration enhancing properties for the active ingredient a),
c) 0.5 - 3.5 wt.-% of at least one emulsifier
d) 0.5 - 15 wt.-% of at least one non-ionic surfactant or dispersing agent and / or at least one anionic surfactant or dispersing agent, based on the weight of the suspension concentrate, and
e) 1 - 10 wt.-% of one or more other additives,
g) water added to 100 wt-%,
wherein the concentrate is free of viscosity modifiers selected from the group of polyacryl amides, guar gum, polyethylene oxides.

In one embodiment of the invention the suspo-emulsions (concentrates) are containing
a) 12 - 25wt.-% of at least one agrochemical active compound which is solid at room temperature, based on the weight of the suspension concentrate,
b) 15 - 35 wt.-% of at least one vegetable or mineral / paraffin oil, based on the weight of the suspension concentrate that optionally has penetration enhancing properties for the active ingredient a),
c) 0.5 - 3 wt.-% of at least one emulsifier
d) 1.5 - 7.5 wt.-% of at least one non-ionic surfactant or dispersing agent and / or at least one anionic surfactant or dispersing agent, based on the weight of the suspension concentrate, and
e) 1 - 10 wt.-% of one or more other additives,
g) water added to 100 wt-%,
wherein the concentrate is free of viscosity modifiers selected from the group of polyacryl amides, guar gum, polyethylene oxides.

Furthermore, it is clear to the skilled artisan that the above referenced ranges can be combined in everyway, wherein a combination of ranges of the same preferred level is preferred, for example a combination of the most preferred ranges. However, a specific disclosure of a combination of ranges shall rather complement the general combinations of ranges than substitute them.

The same applies to all disclosures of preferred ranges in other parts of the instant specification.

Suitable compounds a) of the compositions according to the invention are agrochemical active compounds which are solid at room temperature.

Solid, agrochemical active compounds a) are to be understood in the present composition as meaning all substances customary for plant treatment, whose melting point is above 20°C. Fungicides, bactericides, insecticides, acaricides, nematicides, molluscicides, herbicides, plant growth regulators, plant nutrients, biological actives substances and repellents may preferably be mentioned.

The active compounds identified here by their common names are known and are described, for example, in the pesticide handbook ("The Pesticide Manual" 16th Ed., British Crop Protection Council 2012) or can be found on the Internet (e.g. http://www.alanwood.net/pesticides). The classification is based on the current IRAC Mode of Action Classification Scheme at the time of filing of this patent application.

Preferred insecticides a) are for example one or more of:
abamectin; acetamiprid; acrinathrin; acynonapyr; benzpyrimoxan; broflanilide; clothianidin; cyantraniliprole; chlorantraniliprole; cyclaniliprole; deltamethrin, dicloromezotiaz; dodecadienol; flubendiamide; fluhexafon; imidacloprid; nitenpyram, chlorfenapyr; emamectin; ethiprole; fipronil; flonicamid; flupyradifurone; indoxacarb; metaflumizone; methoxyfenozid; milbemycin; oxazosulfyl; pyridaben; pyridalyl; silafluofen; spinosad; spirodiclofen; spiromesifen; spirotetramat; sulfoxaflor; tetraniliprole; thiacloprid; thiamethoxam; triflumezopyrim; triflumuron.

More preferred insecticides a) are imidacloprid, acetamiprid, thiacloprid, thiamethoxam, cyantraniliprole, chlorantraniliprole, deltamethrin, flubendiamide, tetraniliprole, cyclaniliprole, spiromesifen, spirotetramat, ethiprole, fipronil, flupyradifurone, methoxyfenozid, sulfoxaflor and triflumuron.

Most preferred insecticides a) is deltamethrin.

Preferred fungicides a) are for example one or more of: amisulbrom; bixafen; fenamidone; fenhexamid; fluopicolide; fluopyram; fluoxastrobin; iprovalicarb; isoflucypram, isotianil; pencycuron; penflufen; propineb; prothioconazole; tebuconazole; trifloxystrobin; ametoctradin; amisulbrom; azoxystrobin; benthiavalicarb-isopropyl; benzovindiflupyr; boscalid; carbendazim; chlorothanonil; cyazofamid; cyflufenamid; cymoxanil; cyproconazole; dichlobentiazox; difenoconazole; dipymetitrone; ethaboxam; epoxiconazole; famoxadone; fenpicoxamid; florylpicoxamid; fluazinam; fluopimomide; fludioxonil; fluindapyr; fluquinconazole; flusilazole; flutianil; fluxapyroxad; ipfentrifluconazole; ipflufenoquin; isopyrazam; kresoxim-methyl; lyserphenvalpyr; mancozeb; mandipropamid; mefentrifluconazole; oxathiapiprolin; penthiopyrad; picarbutrazox; picoxystrobin; probenazole; proquinazid; pydiflumetofen; pyraclostrobin; pyraziflumid; pyridachlometyl; quinofumelin; sedaxane; tebufloquin; tetraconazole; valiphenalate; zoxamide; N-cyclopropyl-3-(difluoromethyl)-5-fluoro-N-(2-isopropylbenzyl)-1-methyl-1H-pyrazole-4-carboxamide; 2-{3-[2-(1-{[3,5-bis(difluoromethyl)-1H-pyrazol-1-yl]acetyl}-piperidin-4-yl)-1,3-thiazol-4-yl]-4,5-dihydro-1,2-oxazol-5-yl}-3-chlorophenyl methanesulfonat; and other fungicides can be used.

More preferred fungicides a) are for example such as bixafen, fenamidone, fluopicolide, fluopyram, fluoxastrobin, isoflucypram, isotianil, penflufen, propineb, prothioconazole, tebuconazole, trifloxystrobin, ametoctradin, amisulbrom, azoxystrobin, benthiavalicarb-isopropyl, benzovindiflupyr, boscalid, chlorothanonil, cyazofamid, cyflufenamid, cymoxanil, cyproconazole, difenoconazole, ethaboxam, epoxiconazole, fluazinam, fluquinconazole, fluxapyroxad, isopyrazam, lyserphenvalpyr, mancozeb, oxathiapiprolin, penthiopyrad, picoxystrobin, probenazole, proquinazid, pydiflumetofen, pyraclostrobin, tetraconazole, valiphenalate, zoxamide, isoflucypram , 2-{3-[2-(1-{[3,5-bis(difluoromethyl)-1H-pyrazol-1-yl]acetyl}piperidin-4-yl)-1,3-thiazol-4-yl]-4,5-dihydro-1,2-oxazol-5-yl}-3-chlorophenyl methanesulfonate.

Most preferred fungicides a) are tebuconazole, penflufen, trifloxystrobin, fluopyram, isoflucypram and isotianil, wherein fluopyram is especially preferred.

Preferred herbicides a) are for example (always comprise all applicable forms such as acids, salts, ester, with at least one applicable form): aclonifen; amidosulfuron; bensulfuron-methyl; bromoxynil; bromoxynil potassium; chlorsulfuron; clodinafop; clodinafop-propargyl; clopyralid; cyclopyranil; 2,4-D, 2,4-D-dimethylammonium, -diolamin, -isopropylammonium, -potassium, -triisopropanolammonium, and - trolamine; 2,4-DB, 2,4-DB dimethylammonium, -potassium, and -sodium; desmedipham; dicamba; diflufenican; diuron; ethofumesate; ethoxysulfuron; fenoxaprop-P; fenquinotrione; flazasulfuron; florasulam; florpyrauxifen; florpyrauxifen-benzyl; flufenacet; fluroxypyr; flurtamone; fomesafen; fomesafen-sodium; foramsulfuron; glufosinate; glufosinate-ammonium; glyphosate; glyphosate- isopropylammonium, - potassium, and trimesium; halauxifen; halauxifen-methyl; halosulfuron-methyl; indaziflam; iodosulfuron-methyl-sodium; isoproturon; isoxaflutole; lenacil; MCPA; MCPA-isopropylammonium, -potassium, and sodium; MCPB; MCPB-sodium; mesosulfuron-methyl; mesotrione; metosulam; metribuzin; metsulfuron-methyl; napropamide; napropamide-M; nicosulfuron; pendimethalin; penoxsulam; phenmedipham; picolinafen ; pinoxaden; propoxycarbazone-sodium; pyrasulfotole; pyroxasulfone; pyroxsulam; rimsulfuron; saflufenacil; sulcotrion; tefuryltrione; tembotrione; thiencarbazone-methyl; tolpyralate; topramezone; triafamone; tribenuron-methyl; trifludimoxazin; and other herbicides can be used.

More preferred herbicides a) are for example (always comprise all applicable forms such as acids, salts, ester, with at least one applicable form): amidosulfuron, bensulfuron-methyl, chlorsulfuron, diflufenican, ethoxysulfuron, fenquinotrione, flaza-sulfuron, flufenacet, fluroxypyr, foramsulfuron, halauxifen, halauxifen-methyl, halosulfuron-methyl, iodosulfuron-methyl-sodium, mesosulfuron-methyl, mesotrione, metsulfuron-methyl, nicosulfuron, penoxsulam, pinoxaden, propoxycarbazone-sodium, pyrasulfotole, pyroxasulfone, rimsulfuron, tembotrione, thien-carbazone-methyl, tribenuron-methyl.

Most preferred herbicides a) is diflufenican.

Preferred safeners a) or h) are: Mefenpyr-diethyl, Cyprosulfamide, Isoxadifen-ethyl, (RS)-l-methylhexyl (5-chloroquinolin-8-yloxy)acetate (Cloquintocet-mexyl, CAS-No.: 99607-70-2), metcamifen.

Suitable active ingredients according to the invention may optionally additionally include soluble active ingredients for example dissolved in the aqueous carrier phase and/or liquid active ingredient(s) for example dispersed as an emulsion in the aqueous carrier phase.

All named active ingredients as described here above can be present in the form of the free compound and/or, if their functional groups enable this, an agriculturally acceptable salt thereof. Furthermore, mesomeric forms as well as stereoisomeres or enantiomeres, where applicable, shall be enclosed, as these modifications are well known to the skilled artisan, as well as polymorphic modifications.

In a preferred embodiment of the invention a) is not dissolved in b) and is fully dispersed.

The vegetable oils present in the adjuvant compositions according to the invention are generally known and commercially available. The term vegetable oils is to be understood as including, for example, oils from oleagineous plant species, such as soya bean oil, rapeseed oil, including rapeseed oil methyl ester, maize germ oil, maize kernel oil, sunflower oil, cottonseed oil, linseed oil, coconut oil, palm oil, thistle oil, walnut oil, arachis oil, olive oil or castor oil, colza oil, in particular soya bean oil, rapeseed oil, including rapeseed oil methyl ester,, maize germ oil or sunflower oil and mixtures thereof. The vegetable oils (triglycerides) are preferably esters of C₁₀-C₂₂-, preferably C₁₂-C₂₀-, fatty acids of glycerol. The C₁₀-C₂₂-fatty acid esters of glycerol are, for example, esters of unsaturated or saturated C₁₂-C₂₀-fatty acids, in particular those having an even number of carbon atoms, for example erucic acid, lauric acid, palmitic acid, and in particular C18-fatty acids, such as stearic acid, oleic acid, linoleic acid or linolenic acid. The oils can be further modified such as rapseedmethyl ester or soybeanmethylester.

Possible esters are ethylhexyl palmitate, ethylhexyl oleate, ethylhexyl myristate, ethylhexyl laurate,ethylhexyl caprylate, iso-propyl myristate, iso-propyl palmitate, methyl oleate, methyl palmitate, ethyl oleate, by way of example. Rape seed oil methyl ester and ethylhexyl palmitate are preferred.

Suitable mineral oils are various commercially available distillate fractions of mineral oil (petroleum). Preference is given to mixtures of open-chain C₁₄-C₃₀-hydrocarbons, cyclic hydrocarbons (naphthenes) and aromatic hydrocarbons. The hydrocarbons can be either straight-chain or branched. Particular preference is given to mixtures having an aromatic portion of less than 8% by weight. Very particular preference is given to mixtures having an aromatic portion of less than 4% by weight.

Suitable paraffin oils are straight-chain and branched C₁₄-C₃₀-hydrocarbons. Paraffin oils are also known as base oil or white oil and are commercially available, for example, as Bayol® 85 (Exxon Mobil, Machelen, Belgium), Marcol® 82 (Exxon Mobil, Machelen, Belgium), BAR 0020 (RA.M.oil S.p.A., Naples, Italy), Pionier 0032-20 (Hansen & Rosenthal KG, Hamburg, Germany) or, for example, Kristol M14 (Carless, Surrey, England).

**Tabelle 1 Exemplified trade names and CAS-No's of preferred compounds b)**

| **Tradename** | **Company** | **General description** | **CAS-No.** |
|---|---|---|---|
| Sunflower oil | | Triglycerides from different C14-C18 fatty acids, predominantly unsaturated | 8001-21-6 |
| Rapeseed oil | | Triglycerides from different C14-C18 fatty acids, predominantly unsaturated | 8002-13-9 |
| Corn oil | | Triglycerides from different C14-C18 fatty acids, predominantly unsaturated | 8001-30-7 |
| Soybean oil | | Triglycerides from different C14-C18 fatty acids, predominantly unsaturated | 8001-22-7 |
| Rice bran oil | | Triglycerides from different C14-C18 fatty acids, predominantly unsaturated | 68553-81-1 |
| Radia® 7129 Crodamol® OP | Oleon NV, BE Croda, UK | ethylhexyl palmitate | 29806-73-3 |
| Radia® 7331 | Oleon NV, BE | ethylhexyl oleate | 26399-02-0 |
| Radia® 7128 | Oleon NV, BE | ethylhexyl myristate/laurate C12/C14 | 29806-75-5 |
| Radia® 7127 | Oleon NV, BE | ethylhexyl laurate | 20292-08-4 |
| Radia® 7126 | Oleon NV, BE | ethylhexyl caprylate/caprate C8/10 | 63321-70-0 |
| Estol® 1514 | Croda | iso-propyl myristate | 110-27-0 |
| Radia® 7104 | Oleon NV, BE | Caprylic,capric triglycerides, neutral vegetable oil | 73398-61-5. 65381-09-1 |
| Radia® 7732 Crodamol® IPM | Oleon NV, BE Croda, UK | iso-propyl palmitate | 142-91-6 |
| Radia® 7060 | Oleon NV, BE | methyl oleate | 112-62-9 |
| Radia® 7120 | Oleon NV, BE | methyl palmitate | 112-39-0 |
| Crodamol® EO | Croda | ethyl oleate | 111-62-6 |
| AGNIQUE ME® 18 RD-F, Edenor® MESU | Clariant BASF | Rape seed oil methyl ester | 67762-38-3. 85586-25-0 |
| Exxsol® D100 | Exxon Mobil | Hydrotreated light distillates (petroleum) | 64742-47-8 |
| Solvesso® 200ND | ExxonMobil | Solvent naphtha (petroleum), heavy aromatic, naphtalene depleted | 64742-94-5 |
| Kristol® M14 Marcol® 82 Ondina® 917 | Carless ExxonMobil Shell | White mineral oil (petroleum), C14-C30 branched and linear | 8042-47-5 |
| Exxsol®D130 Banole® 50 | ExxonMobil Total | White mineral oil (petroleum) | 64742-46-7 |
| Genera®-12 | Total | White mineral oil (petroleum) | 72623-86-0 |
| Genera®-9 | Total | White mineral oil (petroleum) | 97862-82-3 |

Compounds a) are preferred which are insoluble in the solvent used (compound b), wherein insoluble means a solubility of < 2% at 20°C in the respective solvent.

In particular compound b) is selected from the group of compounds in which compound a) has a solubility at 20°C of <2%, preferably <1.5%, more preferred of < 1%, even more preferred of < 0.5% and most preferred of <0.3 %.

The suspo-emulsions according to the instant invention contain at least one emulsifier c).

Preferred emulsifiers c) are all substances of this type which can customarily be employed in agrochemical agents. Suitable are ethoxylated nonylphenols, reaction products of alkylphenols with ethylene oxide and/or propylene oxide, alkylpolysaccharides, ethoxylated and/or propoxy-ethoxylated alcohols, ethoxylated castor oils, ethoxylated glycerine mono- or diesters, ethoxylated polyglycerine esters, ethoxylated arylalkylphenols, furthermore ethoxylated and propoxylated arylalkylphenols, and sulphated or phosphated arylalkyl ethoxylates or -ethoxy-propoxylates, where sorbitan derivatives, such as polyethylene oxide-sorbitan fatty acid esters and sorbitan fatty acid esters, may be mentioned by way of example.

Preferred emulsifiers c) are
- tristyrylphenol ethoxylates comprising an average of 5-60 EO units;
- castor oil ethoxylates comprising an average of 5-40 EO units (e.g. Berol® range, Emulsogen® EL range);
- fatty alcohol ethoxylates comprising branched or linear alcohols with 8-18 carbon atoms and an average of 2-30 EO units;
- fatty acid ethoxylates comprising branched or linear alcohols with 8-18 carbon atoms and an average of 2-30 EO units;
- ethoxylated mono- or diesters of glycerine comprising fatty acids with 8-18 carbon atoms and an average of 10-40 EO units (e.g. the Crovol range);
- alkylpolysaccharides (e.g. Agnique® PG8107) ;
- ethoxylated sorbitan fatty acid esters comprising fatty acids with 8-18 carbon atoms and an average of 10-50 EO units (e.g. Arlatone® T, Tween range).
- Furthermore, preferred emulsifiers are a partially saponified polyvinyl alcohol, which even more preferred product has a viscosity of 3.4 - 4.0 mPa.s.

If not otherwise indicated in the instant specification viscosity is measured as measurement of a 4 % aqueous solution at 20 °C DIN 53015 / JIS K 6726.

**Table 2: Exemplified trade names and CAS-No's of preferred emulsifiers c)**

| **Tradename** | **Company** | **General description** | **CAS- No**. |
|---|---|---|---|
| Berol® 827 | Akzo Nobel | castor oil ethoxylate (25EO) | 26264-06-2 |
| Berol® 828 | Akzo Nobel | castor oil ethoxylate (15EO) | 26264-06-2 |
| Berol® 829 | Akzo Nobel | castor oil ethoxylate (20EO) | 26264-06-2 |
| Berol® 192 | Akzo Nobel | castor oil ethoxylate (12EO) | 26264-06-2 |
| Alkamuls® A | Solvay | Oleic acid, ethoxylated | 9004-96-0 |
| Arlatone® T | Croda | ethoxylated sorbitol heptaoleate (40EO) | 54846-79-6 |
| Emulsogen® EL-400 | Clariant | castor oil ethoxylate (40EO) | 61791-12-6 |
| Crovol® CR70G | Croda | fats and glyceridic oils, vegetable, ethoxylated | 70377-91-2 |
| Agnique® PG8107 | BASF | Oligomeric D-glucopyranose decyl octyl glycosides | 68515-73-1 |
| Tween® 80 | Croda | Sorbitan monooleate, ethoxylated (20EO) | 9005-65-6 |
| Tween® 85 | Croda | Sorbitan trioleate, ethoxylated (20EO) | 9005-70-3 |
| Tween® 20 | Croda | Sorbitan monolaurate, ethoxylated (20EO) | 9005-64-5 |
| Kuraray Poval 26-88 | Kuraray | partially saponifed Polyvinylalcohol | 25213-24-5 |
| Kuraray Poval 3-85 | Kuraray | partially saponifed Polyvinylalcohol | 25213-24-5 |

Suitable non-ionic surfactants or dispersing aids d) are all substances of this type which can customarily be employed in agrochemical agents. Preferably polyethylene oxide-polypropylene oxide block copolymers, polyethylene glycol ethers of branched or linear alcohols, reaction products of fatty acids or fatty acid alcohols with ethylene oxide and/or propylene oxide, furthermore polyvinyl alcohol, polyoxyalkylenamine derivatives, polyvinylpyrrolidone, copolymers of polyvinyl alcohol and polyvinylpyrrolidone, and copolymers of (meth)acrylic acid and (meth)acrylic acid esters. Out of the examples mentioned above selected classes can be optionally phosphated and neutralized with bases.

Possible anionic surfactants are all substances of this type which can customarily be employed in agrochemical agents. Alkali metal, alkaline earth metal and ammonium salts of alkylsulphonic or alkylphospohric acids as well as alkylarylsulphonic or alkylarylphosphoric acids are preferred. A further preferred group of anionic surfactants or dispersing aids are alkali metal, alkaline earth metal and ammonium salts of polystyrenesulphonic acids, salts of polyvinylsulphonic acids, salts of alkylnaphthalene sulphonic acids, salts of naphthalenesulphonic acid-formaldehyde condensation products, salts of condensation products of naphthalenesulphonic acid, phenolsulphonic acid and formaldehyde, and salts of lignosulphonic acid, all of which are not very soluble in vegetable oil.

**Table 3: Exemplified trade names and CAS-No's of preferred compounds e)**

| **Tradename** | **Company** | **General description** | **CAS-No.** |
|---|---|---|---|
| Morwet® D-425 | Akzo Nobel | Naphthalene sulphonate formaldehyde condensate Na salt | 9008-63-3 |
| Triton® GR 7 ME | Dow | dioctylsulfosuccinate sodium salt | 577-11-7 |
| Rhodacal® 60/BE | Solvay | CaDBS (60%) in ethylhexanol | 26264-06-2 |
| Tanemul® 1372RM | Levaco | CaDBS (30-50%) in RME | 26264-06-2 |
| Soprophor® 4D384 | Solvay | tristyrylphenol ethoxylate (16EO) sulfate ammonium salt | 119432-41-6 |
| Soprophor® 3D33 | Solvay | tristyrylphenol ethoxylate (16EO) phosphate | 90093-37-1 |
| Soprophor® FLK | Solvay | Poly(oxy-1.2-ethanediyl), alpha.-2.4.6-tris(1-phenylethyl)phenyl-.omega.-hydroxy-, phosphate, potassium salt | 163436-84-8 |
| Supragil® WP | Solvay | Sodium diisopropylnaphthalenesulphonate | 1322-93-6 |
| Reax® 88A | Borregaard LignoTech | Lignosulfonic acid, sodium salt | 68512-34-5 |
| Borresperse® NA | Borregaard LignoTech | Lignosulfonic acid, sodium salt | 8061-51-6 |
| Synperonic® A3 | Croda | alcohol ethoxylate (C12/C15-E03) | 68131-39-5 |
| Synperonic® A7 | Croda | alcohol ethoxylate (C12/C15-EO7) | 68131-39-5 |
| Synperonic® PE/F127 | Croda | block-copolymer of polyethylene oxide and polypropylene oxide | 9003-11-6 |
| Atlox® 4914. | Croda | Non-ionic random copolymer | |
| Atlox® 4912 | Croda | block-copolymer of polyethylene oxide and polyhydroxystearic acid | |
| Dispersogen® LFH | Clariant | tristyrylphenol ethoxylate (20EO) phosphate | 114535-82-9 |

The suspo-emulsion according to the invention preferably contains at least one non-ionic surfactant or dispersing aid and/ or at least one anionic surfactant or dispersing aid d).

In a preferred embodiment the suspo-emulsion according to the invention preferably contains at least one non-ionic surfactant or dispersing aid and at least one anionic surfactant or dispersing aid d).

Suitable additives e) which can be contained in the formulations according to the invention are antifoam agents, preservatives, antioxidants, colourants and inert filling materials.

Suitable antifoam substances are all substances which can customarily be employed in agrochemical agents for this purpose. Silicone oils, silicone oil preparations are preferred. Examples are Silcolapse® 482 from Bluestar Silicones, Silfoam® SC1132 from Wacker [Dimethyl siloxanes and silicones, CAS No. 63148-62-9], SAG 1538 or SAG 1599 from Momentive [Dimethyl siloxanes and silicones, CAS No. 63148-62-9].

Possible preservatives are all substances which can customarily be employed in agrochemical agents for this purpose. Suitable examples for preservatives are preparations containing 5-chloro-2-methyl-4-isothiazolin-3-one [CIT; CAS-No. 26172-55-4], 2-methyl-4-isothiazolin-3-one [MIT, Cas-No. 2682-20-4] or 1.2-benzisothiazol-3(2H)-one [BIT, Cas-No. 2634-33-5]. Examples which may be mentioned are Preventol® D7 (Lanxess), Kathon CG/ICP (Dow), Acticide SPX (Thor GmbH) and Proxel® GXL (Arch Chemicals).

Suitable antioxidants are all substances which can customarily be employed in agrochemical agents for this purpose. Butylhydroxytoluene [3.5-Di-tert-butyl-4-hydroxytoluol, CAS-No. 128-37-0] is preferred.

Possible colourants are all substances which can customarily be employed in agrochemical agents for this purpose. Titanium dioxide, carbon black, zinc oxide, blue pigments, red pigments and Permanent Red FGR may be mentioned by way of example.

Suitable inert filling materials are all substances which can customarily be employed in agrochemical agents for this purpose, and which do not function as thickening agents. Inorganic particles, such as carbonates, silicates and oxides and also organic substances, such as urea-formaldehyde condensates, are preferred. Kaolin, rutile, silica ("highly disperse silicic acid"), silica gels, and natural and synthetic silicates, moreover talc, may be mentioned by way of example.

The suspo-emulsion used according to the invention may be prepared in such a manner that the components are mixed with one another in the desired ratios. The order in which the constituents are combined with one another is freely chooseable. The solid components are expediently employed in the finely ground state. However, it is also possible to subject the suspension which is formed after combining the components first to coarse milling and then to fine milling, so that the mean particle size is below 20 µm. Preferred suspension concentrates are those in which the solid particles have a mean particle size of between 1 and 10 µm measured with Malvern Laser (90% of particles in volume are below this size)

The suspo-emulsion used according to the invention take the form of formulations which remain stable even following prolonged storage at elevated temperatures or in the cold since no crystal growth is observed. They can be converted into homogeneous spray mixtures by dilution with water.

The application rate of the suspo-emulsion used according to the invention can be varied within a substantial range. This depends on the agrochemical active substances in question and on their content in the formulations and in the spray liquids.

With the aid of the suspo-emulsion used according to the invention, it is possible to apply agrochemical active substances-in a particularly advantageous manner to plants and/or their environment.

The formulations used according to the invention can be used to treat all plants and plant parts. In the present context, plants are understood as meaning all plants and plant populations, such as desired and undesired wild plants or crop plants (including naturally occurring crop plants). Crop plants can take the form of plants which can be obtained by conventional breeding and optimization methods or by biotechnological and recombinant methods or by combinations of these methods, including the transgenic plants and including the plant varieties capable or not of being protected by Plant Breeders' Rights. Plant parts are understood as meaning all aerial and subterranean parts and organs of the plants such as shoot, leaf, flower and root, examples which may be mentioned being leaves, needles, stalks, stems, flowers, fruiting bodies, fruits and seeds, and also roots, tubers and rhizomes. The plant parts also include harvested material and vegetative and generative propagation material, for example cuttings, tubers, rhizomes, slips and seeds.

What must be emphasized here is the especially advantageous effect of the compositions according to the invention regarding the use in cereal plants such as, for example, wheat, oats, barley, spelt, triticale and rye, but also in maize, millet and sorghum, rice, sugarcane, soybeans, sunflowers, potatoes, cotton, oilseed rape, canola, tobacco, sugar beet, fodder beet, asparagus, hops and fruit plants (comprising pome fruit such as, for example, apples and pears, stone fruit such as, for example, peaches, nectarines, cherries, plums and apricots, citrus fruits such as, for example, oranges, grapefruits, limes, lemons, cumquats, tangerines and satsumas, nuts such as, for example, pistachios, almonds, walnuts and pecan nuts, tropical fruits such as, for example, mango, papaya, pineapple, dates and bananas, and grapes) and vegetables (comprising leafy vegetables such as, for example, endives, corn salad, Florence fennel, lettuce, cos lettuce, Swiss chard, spinach and chicory, cabbages such as, for example, cauliflower, broccoli, Chinese leaves, borecole (curly kale, feathered cabbage), kohlrabi, Brussels sprouts, red cabbage, white cabbage and savoy cabbage, fruit vegetables such as, for example, aubergines, cucumbers, capsicums, table pumpkins, tomatoes, courgettes and sweet corn, root vegetables such as, for example, celeriac, early turnips, carrots, including yellow cultivars, radish, including small radish, beetroot, scorzonera and celery, pulses such as, for example, beans and peas, and bulb vegetables such as, for example, leeks and table onions).

The treatment according to the invention of the plants and plant parts with the formulations used according to the invention is carried out directly or by acting on their environment, habitat or storage area in accordance with the customary treatment methods by spraying on and, in the case of propagation materials, in particular in the case of seeds, furthermore by applying one or more coats.

The invention is illustrated by the examples which follow. The examples are not to be construed as limiting.

In the examples, the following products are used:

**Table 4**

| **component** | |
|---|---|
| Fluopyram | active ingredient, Bayer AG |
| Diflufenican | active ingredient, Bayer AG |
| Deltamethrin | active ingredient, Bayer AG |
| Propylenglycol | Sigma-Aldrich |
| Proxel® GXL | Biozid, Aqueous dipropylene glycol solution of approx. 20 % 1,2-Benzisothiazolin-3-on as sodium salt, Arch Chemicals |
| 2-Ethylhexylpalmitat | Crodamol OP, Croda |
| Rapseedoil methylester | Agnique ME 18, BASF |
| Kuraray Poval 3-85 | partially saponified Polyvinylalcohol, Kuraray |
| Synperonic F127 | Polyoxyethylene-polyoxypropylene block copolymer, Croda |
| Atlox 4913 | Ethoxylated polymethacrylate (graft copolymer) in water and propylene glycol, Croda |
| SAG 1572 | aqueous emulsion of Polydimethylsiloxan, defoamer, Momentive |
| Rhodopol G | xanthan gum, Solvay |

### Examples:

### Tested Formulations

### Formulations:

| | **F1** | **F2** | **F3** | **F4 (comparative example)** |
|---|---|---|---|---|
| | **SE** | **SE** | **SE** | **SC** |
| **component** | **% wt/wt** | **% wt/wt** | **% wt/wt** | **% wt/wt** |
| Fluopyram | 12 | | | 42 |
| Diflufenican | | 12 | | |
| Deltamethrin | | | 12 | |
| Propylenglycol | 5 | 5 | 5 | 5 |
| Proxel® GXL | 0,18 | 0,18 | 0,18 | 0,18 |
| 2-Ethylhexylpalmitat | 15 | 15 | 15 | |
| Rapsmethylester | 15 | 15 | 15 | |
| Kuraray Poval 3-85 | 0,5 | 0,5 | 0,5 | |
| Synperonic F127 | 5 | 5 | 5 | 5 |
| Atlox 4913 | 2 | 2 | 2 | 2 |
| SAG 1572 | 0,1 | 0,1 | 0,1 | 0,1 |
| Rhodopol G | 0,3 | 0,3 | 0,3 | 0,1 |
| Water | 45,12 | 45,12 | 45,12 | 33,12 |

### Measurement of droplet size

Experiments were carried out with a Malvern Spraytec apparatus, positioned 330 mm below the nozzle outlet orifice. The Spraytec was equipped with a 300 mm lens systems which covers a particle size range from 0.1 - 1000 µm. The nozzle was moved above the laser beam along the long axis of the spray cone with a constant velocity of 20 mm/s from the offsite position towards the laser beam, when stopped in the middle of the spraying pattern (when it sat directly above the laser) and moved back to the initial point. Mean values of volume median diameter (vmd) and the percentage of spray droplets with diameter under 100 µm have been calculated with Malvern Software (Spraytec 3.20). Malvern Software uses Frauenhofer approximation.

Droplets smaller than 30 µm are not expected to be formed by conventional industrial nozzles, so that the Frauenhofer theory is appropriate. All measurements were replicated at least three times.

All measurements were made at a concentration relevant for application use; one product was tested at two concentrations. Cipac C (325 ppm) water was used to prepare all spray liquids. All products have been sprayed with an extended range ("XR" - TeeJet) "03" size flat fan nozzle with a 110° spray angle, a pressure of 3.0 bar and a nominal flow rate of 1.2 L/min at room temperature. Liquids were thoroughly agitated as part of the initial mixing process and put in a pressurized canister to be supplied to the nozzle.

Results from the measurements were analysed to give:
(i) the volume median diameter (vmd) in the spray;
(ii) the percentage of spray volume in droplets <100 µm in diameter - as an indicator of the likely drift risk associated with the spray.

| **Formulation** | Concentration in spray liquid | vmd [µm] | %volume < 100µm |
|---|---|---|---|
| **water (reference)** | | 199.1 | 10.3 |
| **F1** | 2.5 ml/L | 256.6 | 3.4 |
| **F1** | 1.25 ml/L | 260.3 | 3.4 |
| **F4 (comparison)** | 2.5 ml/L | 199.3 | 10.7 |

Reduction of fine spray droplets with diameter under 100 µm was measured for Formulation 1. In each case the reduction of fine spray droplets is over 50% which will lead to a significant spray drift reduction in field. The robustness of this effect was tested for one formulation illustratively. Even with half of the concentration of formulation 1, the reduction of fine spray fraction remains similar.

### Measurement of spray angle

Nozzles are placed on boom at certain distance that together with spray angle aims to achieve an even uniform coverage and even deposition. Thus, it is important not to allow spray angle to collapse and retain it close to manufacturer specification.

Spray angles were calculated illustrative for two measurements of water and SE respectively. Knowing the time of the measurement, velocity of the nozzle and the distance between nozzle and laser beam, spray angle can be derived. In case of water, the measurement took 50.5 seconds and derived spray angle equals 113°. For SE formulation the duration of the measurement was 57.5 seconds and resulted in a spray angle of 120°.

SE formulation slightly increases the spray angle in contrast to many commercial drift reducing additives that can lead to a significant reduction of the spray angle due to viscosity increase of the spray liquid.

### Measurement of surface availability and penetration

Isolated apple leaf cuticles have been used for bioavailability studies of fluopyram formulated as a suspension concentrate (F4) and a suspo-emulsion (F1).

Apple leaf cuticles were isolated from leaves taken from trees in an orchard as described by Schönherr and Riederer (Schönherr, J., Riederer, M. (1986), Plant cuticles sorb lipophilic compounds during enzymatic isolation. Plant Cell Environ. 9, 459-466). Only the astomatous cuticular membranes of the upper leaf surface were obtained. Discs were punched out of the leaves and infiltrated with an enzymatic solution of pectinase and cellulase. The cuticular membranes were separated from the digested leaf cell broth, cleaned by gently washing with water and dried. After storage for about four weeks the permeability's of the cuticles reach a constant level and the cuticular membranes are ready for the use in the penetration test.

The cuticular membranes are applied to diffusion vessels. This cuticle penetration test is a further developed and adapted version of the test method SOFU (simulation of foliar uptake) originally described by Schönherr and Baur (Schönherr, J., Baur, P. (1996), Effects of temperature, surfactants and other adjuvants on rates of uptake of organic compounds. In: The plant cuticle - an integrated functional approach, 134-155. Kerstiens, G. (ed.), BIOS Scientific publisher, Oxford.). The method is well suited for systematic and mechanistic studies on the effects of formulations, adjuvants and solvents on the penetration of agrochemicals. A spray droplet of 1 - 5µl is applied with a pipette to the outer surface of the cuticle. The diffusion vessel is turned around and carefully filled with acceptor solution. Selection of acceptor medium is used to simulate the apoplast as natural desorption medium at the inner surface of the cuticle and is buffered to pH 5.5.

The diffusion vessels filled with acceptor and stirrer are transferred to a thermostated stainless steel block which ensures not only a well defined temperature but also a constant humidity at the cuticle surface with the spray deposit. An auto sampler takes regularly aliquots of the acceptor and the content of active ingredient is estimated by HPLC. All data points are finally put together to give a penetration kinetic. Each kinetic is a mean value of seven repetitions.

| **Formulation** | **penetration across apple leaf cuticle** | | |
|---|---|---|---|
| | 12 h | 24 h | 48 h |
| **F4** | 1.3% | 4.2% | 22.0% |
| **F1** | 56.6% | 82.4% | 99.0% |

Penetration of fluopyram was measured at 30°C and 56% relative humidity.

Formulation F4 shows a significantly lower penetration of fluopyram compared to Formulation F1. Thus, Formulation F1 is showing a very low drift potential of fine droplets with a very high biological availability.

Another aspect of the instant invention is the use of the concentrate (suspo-emulsion) to adjust the droplet size upon spraying in agrochemical spray compositions and the mitigation of drift of the agrochemical active compound.

Another aspect of the invention is the use of the adjuvant combination of at least on emulsifier and at least on oil according to compound b) to adjust the droplet size upon spraying in agrochemical spray compositions and the mitigation of drift of the agrochemical active compound.

## Claims

1. A suspo-emulsion containing
a) at least one agrochemical active compound which is solid at room temperature,
b) at least one vegetable, mineral or paraffinic oil, or chemical derivatives thereof,
c) at least one emulsifier,
d) at least one non-ionic surfactant or dispersing agent and and/or at least one anionic surfactant or dispersing agent, and
e) optionally one or more other additives,
for reducing the drift of the agrochemically active compound upon spraying.

2. A suspo-emulsion according to claim 1, wherein the suspo-emulsion is free of viscosity modifiers that increase the viscosity of the spray liquid.

3. A suspo-emulsion according to claim 1 or 2, containing
a) 8 - 35 wt.-% of at least one agrochemical active compound which is solid at room temperature, based on the weight of the suspension concentrate,
b) 8 - 40 wt.-% of at least one vegetable or mineral / paraffin oil, based on the weight of the suspension concentrate that optionally has penetration enhancing properties for the active ingredient a),
c) 0.4 - 4 wt.-% of at least one emulsifier
d) 0.5 - 15 wt.-% of at least one non-ionic surfactant or dispersing agent and / or at least one anionic surfactant or dispersing agent, based on the weight of the suspension concentrate, and
e) 0.1 - 20 wt.-% of one or more other additives,
g) water added to 100 wt-%,
wherein the concentrate is free of viscosity modifiers selected from the group of polyacryl amides, guar gum, polyethylene oxides.

4. A suspo-emulsion according claims 1 or 2, containing
a) 12 - 5wt.-% of at least one agrochemical active compound which is solid at room temperature, based on the weight of the suspension concentrate,
b) 15 - 35 wt.-% of at least one vegetable or mineral / paraffin oil, based on the weight of the suspension concentrate that optionally has penetration enhancing properties for the active ingredient a),
c) 0.5 - 3 wt.-% of at least one emulsifier
d) 1.5 - 7.5 wt.-% of at least one non-ionic surfactant or dispersing agent and / or at least one anionic surfactant or dispersing agent, based on the weight of the suspension concentrate, and
e) 1 - 10 wt.-% of one or more other additives,
g) water added to 100 wt-%,
wherein the concentrate is free of viscosity modifiers selected from the group of polyacryl amides, guar gum, polyethylene oxides.

5. A suspo-emulsion according claims one or more of the preceeding claims, **characterized in that** Xanthan as stabilizer is comprised in an amount from 0.01 to 3 % by weight.

6. A suspo-emulsion according claims one or more of the preceeding claims, **characterized in that** the agrochemical active compound is selected from the group consisting of imidacloprid, acetamiprid, thiacloprid, thiamethoxam, cyantraniliprole, chlorantraniliprole, deltamethrin, flubendiamide, tetraniliprole, cyclaniliprole, spiromesifen, spirotetramat, ethiprole, fipronil, flupyradifurone, methoxyfenozid, sulfoxaflor and triflumuron, bixafen, fenamidone, fluopicolide, fluopyram, fluoxastrobin, isoflucypram, isotianil, penflufen, propineb, prothioconazole, tebuconazole, trifloxystrobin, ametoctradin, amisulbrom, azoxystrobin, benthiavalicarb-isopropyl, benzovindiflupyr, boscalid, chlorothanonil, cyazofamid, cyflufenamid, cymoxanil, cyproconazole, difenoconazole, ethaboxam, epoxiconazole, fluazinam, fluquinconazole, fluxapyroxad, isopyrazam, lyserphenvalpyr, mancozeb, oxathiapiprolin, penthiopyrad, picoxystrobin, probenazole, proquinazid, pydiflumetofen, pyraclostrobin, tetraconazole, valiphenalate, zoxamide, isoflucypram , 2-{3-[2-(1-{[3,5-bis(difluoromethyl)-1H-pyrazol-1-yl]acetyl}piperidin-4-yl)-1,3-thiazol-4-yl]-4,5-dihydro-1,2-oxazol-5-yl}-3-chlorophenyl methanesulfonate amidosulfuron, bensulfuron-methyl, chlorsulfuron, diflufenican, ethoxysulfuron, fenquinotrione, flaza-sulfuron, flufenacet, fluroxypyr, foramsulfuron, halauxifen, halauxifen-methyl, halosulfuron-methyl, iodosulfuron-methyl-sodium, mesosulfuron-methyl, mesotrione, metsulfuron-methyl, nicosulfuron, penoxsulam, pinoxaden, propoxycarbazone-sodium, pyrasulfotole, pyroxasulfone, rimsulfuron, tembotrione, thien-carbazone-methyland tribenuron-methyl, as well as mixtures thereof.

7. A suspo-emulsion according to one or more of the preceeding claims, **characterized in that** the agrochemical active compound is selected from the group consisting of deltametrin, fluopyram and diflufenican.

8. A suspo-emulsion according to one or more of the preceeding claims, **characterized in that** component b) is selected from the group comprising rape seed oil methyl ester and 2-ethyl-hexyl-palmitate as well as mixtures thereof.

9. A suspo-emulsion according to one or more of the preceeding claims, **characterized in that** component c) is selected from the group comprising ethoxylated nonylphenols, reaction products of alkylphenols with ethylene oxide and/or propylene oxide, alkylpolysaccharides, ethoxylated and/or propoxy-ethoxylated alcohols, ethoxylated castor oils, ethoxylated glycerine mono- or diesters, ethoxylated polyglycerine esters, ethoxylated arylalkylphenols, furthermore ethoxylated and propoxylated arylalkylphenols, and sulphated or phosphated arylalkyl ethoxylates or -ethoxy-propoxylates, sorbitan derivatives, polyethylene oxide-sorbitan fatty acid esters and sorbitan fatty acid esters.

10. A suspo-emulsion according to one or more of the preceeding claims, **characterized in that** component d) is selected from the group comprising polyethylene oxide-polypropylene oxide block copolymers, polyethylene glycol ethers of branched or linear alcohols, reaction products of fatty acids or fatty acid alcohols with ethylene oxide and/or propylene oxide, polyvinyl alcohol, polyoxyalkylenamine derivatives, polyvinylpyrrolidone, copolymers of polyvinyl alcohol and polyvinylpyrrolidone, and copolymers of (meth)acrylic acid and (meth)acrylic acid esters, alkali metal, alkaline earth metal and ammonium salts of alkylsulphonic or alkylphospohric acids, alkylarylsulphonic or alkylarylphosphoric acids, alkali metal, alkaline earth metal and ammonium salts of polystyrenesulphonic acids, salts of polyvinylsulphonic acids, salts of alkylnaphthalene sulphonic acids, salts of naphthalenesulphonic acid-formaldehyde condensation products, salts of condensation products of naphthalenesulphonic acid, phenolsulphonic acid and formaldehyde, and salts of lignosulphonic acid, as well as mixtures thereof.

11. A suspo-emulsion according to one or more of the preceeding claims, **characterized in that** component e) is selected from the group comprising antifoam agents, preservatives, antioxidants, colourants and inert filling materials as well as mixtures thereof.

12. Use of a suspo-emulsion according to claim 1 for the reduction of the drift of a spray liquid containing the suspo-emulsion during spray application.

13. Use of the suspo-emulsion according to claim 12 for the reduction of the drift of a spray liquid containing the suspo-emulsion during spray application, wherein the spray liquid contains contains 0.00005 - 2.5 wt.-% of the suspo-emulsion, based on the weight of the spray liquid, including water.

14. An adjuvant combination for the reduction of spray drift upon spraying in agrochemical spray compositions and the mitigation of drift of the agrochemical active compound comprising least on emulsifier and a mixture of methyl ester and 2-ethyl-hexyl-palmitate.
